# EUROPEAN PATENT APPLICATION

(11) **EP 4 701 095 A1**
(43) Date of publication of application: **25.02.2026**
(21) Application number: 24195985.7
(22) Date of filing: 22.08.2024
(51) Int. Cl.: H04B 7/185

(54) **METHODS, COMPUTER PROGRAMS, AND APPARATUSES FOR A NON-TERRESTRIAL BASE STATION, A TERRESTRIAL BASE STATION, AND A NETWORK NODE, COMMUNICATION SYSTEM**

(71) Applicant: Deutsche Telekom AG, 53113 Bonn (DE)
(72) Inventor: BREITBACH, Johannes Markus, 53227 Bonn (DE); RASS, Jörg, 50859 Köln (DE); BRITSCH, Matthias, 53639 Königswinter (DE); STÖRMER, Wolfgang, 50374 Erftstadt (DE)
(74) Representative: 2SPL Patentanwälte PartG mbB

(57) **Abstract**

Examples relate to methods, computer programs, and apparatuses for a non-terrestrial base station, a terrestrial base station, and a network node. The method (10) for the terrestrial base station (300) of the mobile communication system (600) comprises offering (11) radio services in one or more radio cells covered by the terrestrial base station (300) and receiving (12) a signal transmitted from a user equipment, UE (64; 66), located in the one or more radio cells to a non-terrestrial base station (400) of the mobile communication system (600). The method (10) further comprises determining (13) information for identifying the UE (64; 66) based on the received signal and informing (14) the non-terrestrial base station (400) about the UE (64; 66) if the UE (64; 66) can be served by the terrestrial base station (300).

## Description

### Field

Examples relate to methods, computer programs, and apparatuses for a non-terrestrial base station, a terrestrial base station, and a network node, more particularly, but not exclusively, to a concept for managing handover of user equipment, UE, between terrestrial base stations and non-terrestrial base stations in a wireless communication system.

### Background

Wireless communication networks provide radio services for UEs, mostly organized in radio cells. Depending on the network deployment the radio cells may have different sizes. In practice, terrestrial mobile radio networks have coverage gaps between radio cells. There are several reasons for this. For example, mobile network users are very unevenly distributed geographically. Cities have high user densities, while rural areas have a very low number of users. From an economic point of view, mobile network operators are therefore primarily expanding their networks in cities and towns, while coverage gaps remain in sparsely populated or even uninhabited areas. In addition, mountains and valleys, large buildings and wooded areas cause shading. In shadowed regions, mobile coverage is significantly impaired or even impossible.

In these coverage gaps, mobile customers cannot communicate with their devices. The fact that existing communication connections, e.g. telephone calls, are interrupted when a mobile subscriber leaves a covered area and moves into a coverage gap is particularly disruptive. Even in generally well-supplied regions such as Europe, mobile networks often have a large number of small coverage gaps. A large number of small gaps in coverage are particularly annoying because there are so many places where ongoing calls can be interrupted. On the other hand, the technical effort required to close these many gaps in coverage by setting up additional terrestrial base stations is extremely high.

Satellites and stratospheric aircraft (High Altitude Platform Systems, HAPS) offer a possible solution. Due to their altitude, they are much less affected by the shadowing effects described above than base stations on the ground and can also cover large contiguous areas.

### Summary

It is a finding of the present disclosure that in releases 17 and 18, the 3GPP (3rd Generation Partnership Project) has already standardized solutions for integrating satellites and HAPS into mobile networks. In idle mode, i.e. when no data transmission is in progress, a terminal has time to scan through a plurality of carrier frequencies to find the respective base stations. In idle mode there is no risk of losing an ongoing connection (drop call). Examples of the present disclosure consider end devices in connected mode, i.e. during an ongoing data transmission or an existing voice connection, and in this situation the terminals are provided with guidance about carrier frequencies to monitor for potential handover. It is a further finding that it can be beneficial to handover devices connected to a non-terrestrial base station to a terrestrial base station if possible. For example, due to lower propagation distances, communication latency can be improved when handing over a UE from a non-terrestrial base station to a terrestrial base station. In order to enable such a handover, the two base stations involved need to coordinate with each other. It is a further finding that a terrestrial base station may overhear or receive a communication between a UE and a non-terrestrial base station serving the UE. For example, by receiving a signal from the UE communicated towards the non-terrestrial base station a terrestrial base station can determine that the UE may as well be served by said terrestrial base station.

Examples provide a method for a terrestrial base station of a mobile communication system. The method comprises offering radio services in one or more radio cells covered by the terrestrial base station and receiving a signal transmitted from a user equipment, UE, located in the one or more radio cells to a non-terrestrial base station of the mobile communication system. The method further comprises determining information for identifying the UE based on the received signal and informing the non-terrestrial base station about the UE if the UE can be served by the terrestrial base station. Examples may enable a detection of a servable UE, which is in communication with a non-terrestrial base station, at a terrestrial base station. By informing the non-terrestrial base station, a coordinated handover procedure can be triggered.

For example, the method at the terrestrial base station further comprises obtaining an address of the non-terrestrial base station and the informing of the non-terrestrial base station may use the address. The address may be obtained from signals provided by the non-terrestrial base station or by analyzing the signal received from the UE. Once the address is obtained, an efficient communication between the involved base stations can be established.

In some examples the determining of the information for identifying comprises decoding an identifier from the received signal. For example, the UE may transmit a UE specific ID (identification) with its signals, which is also received by the terrestrial base station and provided to the non-terrestrial base station. This may allow the non-terrestrial base station identifying which UE the terrestrial base station is referring to. Additionally or alternatively, the determining of the information for identifying comprises detecting characteristic information from the received signal and forwarding of the characteristic information to the non-terrestrial base station to enable UE identification at the non-terrestrial base station. The characteristic information may enable the non-terrestrial base station to identify a signal with the same characteristic and therewith the UE. The characteristic information may therefore enable an efficient identification mechanism at the non-terrestrial base station. For example, the characteristic information may be information about measurements conducted by the UE.

The measurements conducted by the UE are reported to the non-terrestrial base station. By indicating specific measurements, the terrestrial base station can enable the non-terrestrial base station to identify the UE by measurement comparison, the results thereof respectively. Another example of characteristic information are reception times of signals from the UE. The reception times of signals from the UE may constitute a time signature that enables UE identification, as the time signatures at the terrestrial base station and at the non-terrestrial base station can be matched. Thereby another efficient identification mechanism may be provided. In yet another example the method may comprise informing the non-terrestrial base station about the coverage area of the terrestrial base station to facilitate identification of the UE at the non-terrestrial base station using a location of the UE. As it can be assumed that a radio cell of the non-terrestrial base station is much larger than a radio cell of the terrestrial base station, restricting a potential location of a UE to the cell area of the terrestrial base station can narrow down potential candidate UEs at the non-terrestrial base station and the identification of a specific UE can be facilitated.

In further examples the method at the terrestrial base station can further comprise informing the non-terrestrial base station about parameters of the terrestrial base station to enable handover and/or cell reselection of the UE from the non-terrestrial base station to the terrestrial base station. That way, the handover or cell-reselection procedure can be made more efficient as the non-terrestrial base station would be enabled to inform the UE quicker.

Examples also provide a method for a non-terrestrial base station of a mobile communication system. The method comprises communicating radio signals with user equipment, UE, located in one or more radio cells of the non-terrestrial base station and receiving information from a terrestrial base station indicating that the terrestrial base station is capable of serving a UE currently communicating with the non-terrestrial base station. The method further comprises informing the UE about the terrestrial base station. That way, handover can be facilitated.

The method for the non-terrestrial base station may further comprise identifying the UE based on information provided by the terrestrial base station. That way, a potential handover process can be made more efficient, because the non-terrestrial base station can identify the UE right away based on the information received from the terrestrial base station and does not have to wait until the UE reports an according measurement. For example, the identifying is based on an identification of the UE provided by the terrestrial base station and/or based on characteristic information for the signals of the UE provided by the terrestrial base station. As outlined above, a direct identifier may be received or characteristic information for the signals of the UE that allow or at least facilitate identification of the UE. The informing of the UE may comprise instructing the UE to add a cell or frequency of a cell of the terrestrial base station to a list of neighbor cells or frequencies of cells maintained at the UE for handover and/or cell selection measurements. That way, the UE may perform measurements and trigger the corresponding procedure subsequently. Furthermore, the informing of the UE may comprise instructing the UE to handover to the terrestrial base station or to reselect a cell of the terrestrial base station. Hence, a transfer procedure for the UE may be triggered directly.

Examples also provide a method for a network node of a mobile communication system. The method comprises obtaining information about one or more radio cells of a non-terrestrial base station and obtaining information about one or more radio cells of a terrestrial base station. The method further comprises determining neighbor relations between the one or more radio cells of the non-terrestrial base station and the one or more cells of the terrestrial base station. The method also includes informing the terrestrial base station about a neighboring cell of the non-terrestrial base station. Examples therewith also enable a core network-based solution, in which the network node collects or receives the relevant information and then informs the relevant base stations accordingly. For example, the informing about the neighboring cell is performed by informing the terrestrial base station about a carrier frequency of the neighboring cell. That way, the terrestrial base station can be informed which carrier frequencies to monitor for potential UEs being served by a non-terrestrial base station and being candidates for handover or cell (re-)selection to the terrestrial base station.

In some examples the obtaining of the information about the one or more radio cells of the non-terrestrial base station comprises obtaining geographical information about the cell (centers) of the one or more radio cells of the non-terrestrial base station. The obtaining of the information about the one or more radio cells of the terrestrial base station may likewise comprises obtaining geographical information about the cell (centers) of the one or more radio cells of the terrestrial base station. That way, potential neighbor relations can be obtained by comparing the geographical data of the radio cells, their centers, respectively.

In further examples, the method for the network node may further comprise receiving information about a carrier frequency of a non-terrestrial base station serving a UE from a terrestrial base station and providing information about an address of the non-terrestrial base station to the terrestrial base station. The method, the network node respectively, may hence enable the obtaining of an address of a non-terrestrial base station at a terrestrial base station. A terrestrial base station may hence determine a carrier frequency of a non-terrestrial base station using said carrier frequency to serve a certain UE. The method at the network node may allow finding a respective address of the non-terrestrial base station.

Examples also provide an apparatus for a base station or a network node of a mobile communication system. The apparatus comprises one or more interfaces configured to communicate (radio signals) in the mobile communication system and one or more signal processing devices configured to process signals and/or information communicated in the mobile communication system using the one or more interfaces. The one or more signal processing devices are further configured to perform one of the methods described herein. Further examples are a non-terrestrial base station, a terrestrial base station, and a network node comprising such an apparatus. Yet another example is a mobile communication system comprising examples of a terrestrial base station, a non-terrestrial base station, or a network node as described herein.

A computer program having a program code for performing one of the methods described herein, when the computer program is executed on a computer, a processor, or a programmable hardware component, is another example.

### Brief description of the Figures

Some examples of apparatuses, methods, and/or computer programs will be described in the following by way of example only, and with reference to the accompanying figures, in which
Fig. 1 shows a block diagram of an example of a method for a terrestrial base station;
Fig. 2 shows a block diagram of an example of a method for a non-terrestrial base station;
Fig. 3 shows a block diagram of an example of a method for a network node;
Fig. 4 shows block diagrams of apparatuses for a terrestrial base station and a non-terrestrial base station; and
Fig. 5 illustrates another example in a mobile communication system.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

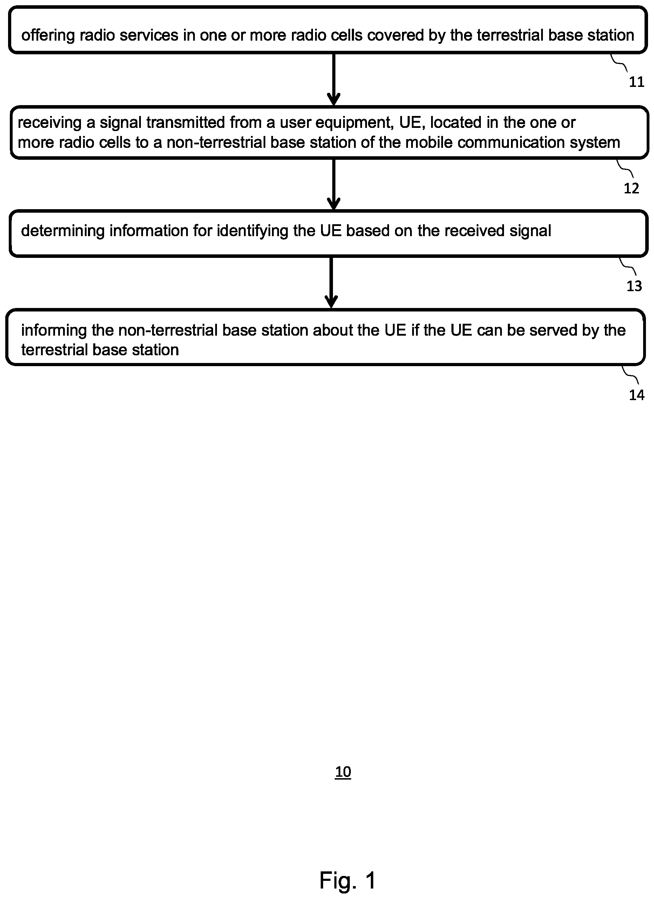

Fig. 1 shows a block diagram of an example of a method 10 for a terrestrial base station of a mobile communication system. The method comprises offering 11 radio services in one or more radio cells covered by the terrestrial base station. The terrestrial base station hence provides one or more radio cells, in which radio services can be provided to UEs. The method 10 further comprises receiving 12 a signal transmitted from a UE located in the one or more radio cells to a non-terrestrial base station of the mobile communication system. The method 10 further comprises determining 13 information for identifying the UE based on the received signal and informing 14 the non-terrestrial base station about the UE if the UE can be served by the terrestrial base station.

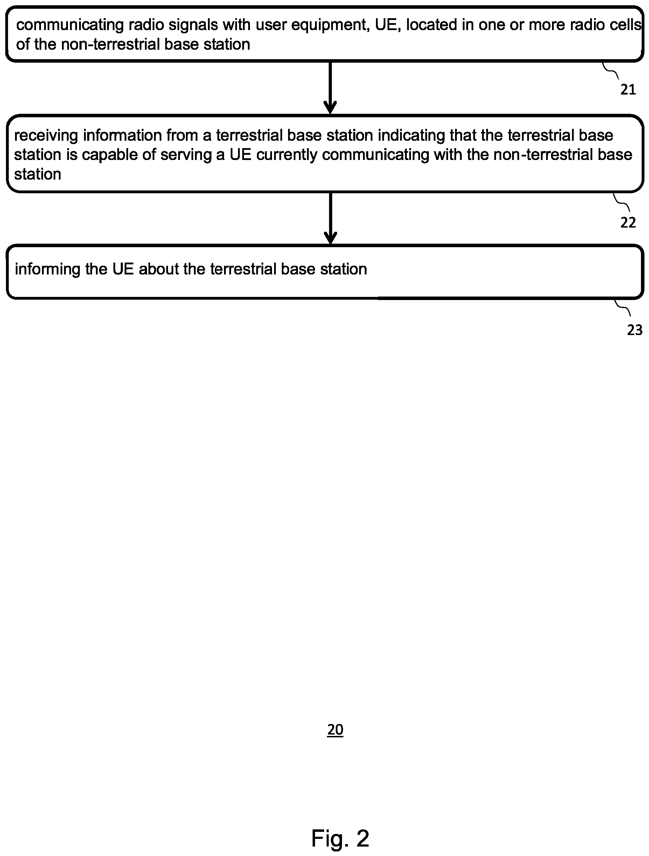

Fig. 2 shows a block diagram of an example of a method 20 for a non-terrestrial base station of a mobile communication system. The method 20 comprises communicating 21 radio signals with UE located in one or more radio cells of the non-terrestrial base station and receiving 22 information from a terrestrial base station indicating that the terrestrial base station is capable of serving a UE currently communicating with the non-terrestrial base station. The method 20 further comprises informing 23 the UE about the terrestrial base station.

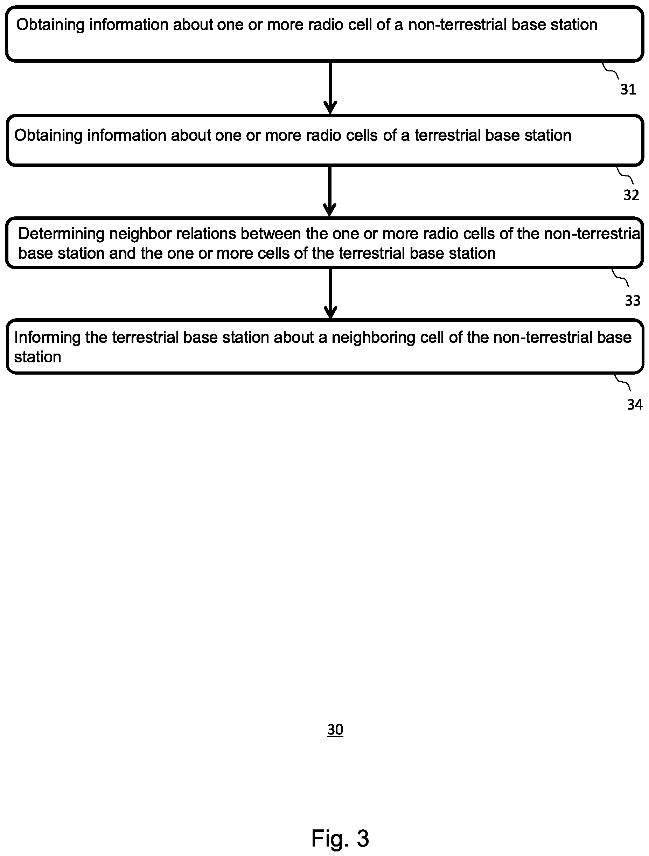

Fig. 3 shows a block diagram of a method 30 for a network node of a mobile communication system. The method 30 comprises obtaining 31 information about one or more radio cells of a non-terrestrial base station and obtaining 32 information about one or more radio cells of a terrestrial base station. The method 30 further comprises determining 33 neighbor relations between the one or more radio cells of the non-terrestrial base station and the one or more cells of the terrestrial base station. The method 30 also comprises informing 34 the terrestrial base station about a neighboring cell of the non-terrestrial base station.

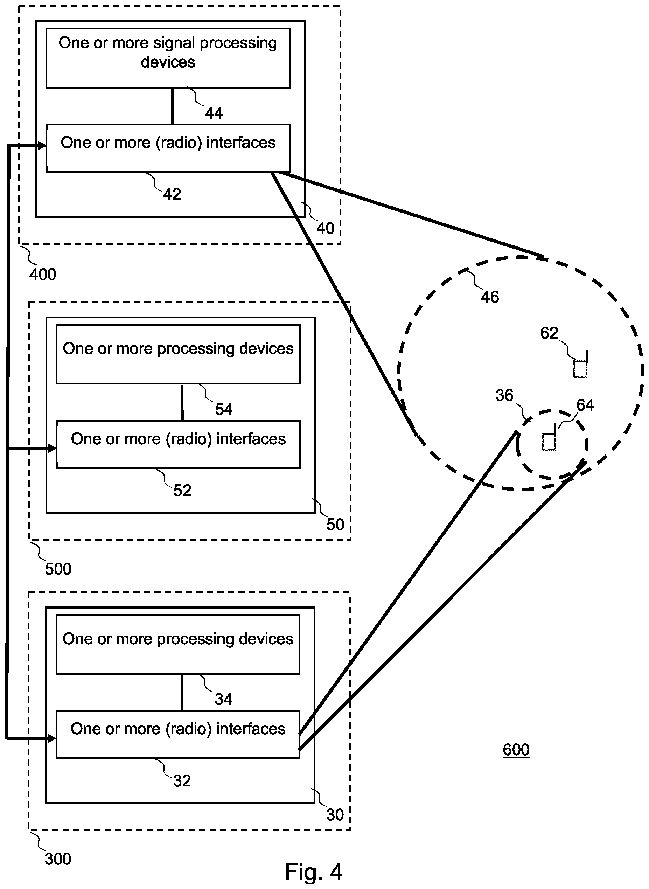

Fig. 4 shows block diagrams of apparatuses 30, 40, 50 for a terrestrial base station 300, a non-terrestrial base station 400, and a network node 500. As shown in Fig. 4 the apparatus 30 for the terrestrial base station 300 comprises one or more radio interfaces 32 configured to communicate in the mobile communication system 600. The one or more radio interfaces 32 are coupled to one or more signal processing devices 34, which are configured to process signals communicated in the mobile communication system 600 using the one or more interfaces 32. The one or more signal processing devices 34 are further configured to perform one of the methods 10 for the terrestrial base station 300 as described herein. Fig. 4 also illustrates a terrestrial base station 300, which comprises the apparatus 30. The terrestrial base station 300 is shown in broken lines as it is optional from the perspective of the apparatus 30.

As also shown in Fig. 4, the apparatus 40 for the non-terrestrial base station 400 comprises one or more interfaces 42 configured to communicate (radio signals) in the mobile communication system 600. The one or more interfaces 42 are coupled to one or more signal processing devices 44, which are configured to process signals communicated in the mobile communication system 600 using the one or more interfaces 42. The one or more signal processing devices 44 are further configured to perform one of the methods 20 for the non-terrestrial base station 400 as described herein. Fig. 4 also illustrates a non-terrestrial base station 400, which comprises the apparatus 40. The non terrestrial base station 400 is shown in broken lines as it is optional from the perspective of the apparatus 40.

Moreover, Fig. 4 illustrates the apparatus 50 for the network node 500. The apparatus 50 comprises one or more interfaces 52 configured to communicate in the mobile communication system 600, e.g. with the apparatuses 30, 40 or the base stations 300, 400. The one or more interfaces 52 are coupled to one or more signal processing devices 54, which are configured to process signals or information communicated in the mobile communication system 600 using the one or more interfaces 52. The one or more signal processing devices 54 are further configured to perform one of the methods 30 for the network node 500 as described herein. Fig. 4 also illustrates a network node 500, which comprises the apparatus 50. The network node 500 is shown in broken lines as it is optional from the perspective of the apparatus 50. The apparatus 50 and the network node 500 are optional in examples. The network node 500 can be used to collect information about radio cells as outlined above and then inform the terrestrial base stations about neighbor relations or at least about carrier frequencies to monitor for UEs that are potential handover/cell (re-)selection candidates. In some examples, such functionality can be comprised in a base station. In other embodiments the base stations may handle the obtaining of such information individually, e.g. by scanning for such frequencies.

As also indicated in Fig. 4 the non-terrestrial base station 400 provides a radio cell 46 (offers radio services in cell 46) and the terrestrial base station 300 provides a radio cell 36 (offers radio services in cell 36), which lies inside the radio cell 46. The non-terrestrial base station 400 can therefore serve UEs 62, 64 inside radio cell 46. As shown in Fig. 4 UE 64 is also located in radio cell 36 provided by the terrestrial base station 300. The terrestrial base station 300 can therefore receive signals from the UE 64 although the signals are directed to the non-terrestrial base station 400. From the received signals the terrestrial base station 300 can determine information for identifying the UE 64 and inform the non-terrestrial base station 400 about the UE 64. The non-terrestrial base station 400 receives the information from the terrestrial base station 300. The information indicates that the terrestrial base station 300 is capable of serving the UE 64 currently communicating with the non-terrestrial base station 400. The non-terrestrial base station 400 may then communicate radio signals with the UE 64 located in its radio cell 46. The non-terrestrial base station then informs the UE 64 about the terrestrial base station 300. The terrestrial base station 300 may optionally be informed by the network 500 about the neighboring cell 46, e.g. which carrier frequency(-ies) to monitor in order to receive the signals from the UE 64. Another example shown in Fig. 4 is a mobile communication system 600, which comprises the terrestrial base station 300, the non-terrestrial base station 400, and/or the network node 500.

As outlined above the terrestrial base station 300 (apparatus 30, method 10) informs the non-terrestrial base station 400 (apparatus 40, method 20) in case the UE 64 can be served by the terrestrial base station 300. In some other examples, such communication may be through the network node 500. Criteria to determine if the terrestrial base station 300 can serve the UE 64 are, for example, signal quality, load at the terrestrial base station 300, whether the UE belongs to the same network operator and if not if the UE is allowed to roam to the terrestrial base station 300, quality of service requirements (data rate, latency, error rates) at the UE, etc.

As illustrated in Fig. 4, the respective one or more signal processing devices 34, 44, 54 are coupled to the respective one or more interfaces 32, 42, 52. The one or more interfaces 32, 42, 52 may serve as interface for communicating in the communication system 600. The one or more interfaces 32, 42, 52 may correspond to one or more inputs and/or outputs for receiving and/or transmitting information, which may be in digital (bit) values or analog according to a specified code or protocol, within a module, between modules or between modules of different entities. For example, an interface may comprise interface circuitry configured to receive and/or transmit information. In examples an interface may comprise any means for obtaining, receiving, transmitting or providing analog or digital signals or information, e.g., any connector, contact, pin, register, input port, output port, conductor, lane, etc., which allows providing or obtaining a signal or information. The one or more interfaces 32, 42, 52 may be configured to communicate (transmit, receive, or both) in a wireless and/or wired manner and it may be configured to communicate, i.e., transmit and/or receive signals, information with further internal or external components. The one or more interfaces 32, 42, 52 or the apparatuses 30, 40, 50 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, one or more antennas, etc. For example, the respective one or more interfaces 32, 42, 52 may enable radio communication with UEs and communication between base stations, which can be directly and/or indirectly, wired and/or wireless, respectively.

The one or more (signal) processing devices 34, 44, 54 may be implemented using one or more processing units, one or more circuitries, any means for processing, such as a processor, a computer or a programmable hardware component being operable with accordingly adapted software. In other words, the described function of the one or more processing devices 34, 44, 54 may as well be implemented in software, which is then executed on one or more programmable hardware components. Such hardware components may comprise a general-purpose processor, a Digital Signal Processor (DSP), a micro-controller, etc.

In examples, the non-terrestrial base station 400 may be implemented, completely or at least partly, in an aircraft, a satellite or a High-Altitude Platform System (HAPS). In examples the non-terrestrial base station 400 may be implemented as a terrestrial ground station with non-terrestrial reflector or repeater, which is located at an aircraft, a satellite or a HAPS. Implementation options include the so-called "regenerative payload" approach, in which the payload and control signals are fully processed off-ground, and the so-called "transparent payload" approach, in which the non-terrestrial part only serves as reflector, which might also shift the frequency of the signals. A network entity, e.g. a non-terrestrial base station (implemented at a satellite, platform, airplane, etc.) or a terrestrial base station 300, may generate cells of a cellular system and/or the network entity may be in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, etc. In case of a moving implementation in a satellite, an airplane, etc. the link towards a core network of the communication system may also be implemented in a wireless manner.

The mobile communication system 600 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, as a ground station, etc. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

The mobile communication system 600 may further comprise a core network, with multiple further network nodes 500. A network node 500 may hence be a server, router or processing component in the mobile communication system 600. One specific network node 500 may also be configured to carry out the above-described method 30 and may comprise the above-described apparatus 50.

In general, the UE may be a communication device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. The communication device may be in a vehicle, a car, a bus, a truck, a construction and/or agricultural machinery, a train, an airplane, a boat, a ship, a cruise ship, an Internet of Things (IoT) device, a logistics application, etc. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system 600 may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A core problem in mobile communication systems comprising terrestrial base stations and non-terrestrial base stations is to recognize which terrestrial and non-terrestrial base stations a terminal device can connect to, which of these connections provides the best transmission quality and when the terminal device should switch from a terrestrial to a non-terrestrial base station or vice versa. A distinction may be made between three cases:
- Movement of the terminal device from an area with terrestrial coverage to an area without terrestrial coverage (e.g. if UE 64 in Fig. 4 is served by terrestrial base station 300 and then moves outside coverage 36):
   A terminal device connected to a terrestrial base station can monitor the quality of the radio link by measuring the reception power in the DL (downlink). For example, the 3GPP has specified the parameters Reference Signal Received Power (RSRP), Reference Signal Received Quality (RSRQ), Signal to Interference plus Noise Ratio (SINR) and Received Signal Strength Indicator (RSSI) in its 5G standard.
   If the terminal device moves from an area with terrestrial coverage to an area without terrestrial coverage, it notices that the quality of the radio connection deteriorates. It then searches for another base station that can be received with better quality. The end device has a list of neighbor cells or frequencies of cells to monitor and to conduct measurements at. This list contains frequencies of neighboring base stations that are eligible for a handover and/or cell reselection and the neighbor cells or frequencies on this list are distributed by each base station on its broadcast channel and/or transmitted via RRC signaling. If the list also contains frequencies of one or more non-terrestrial base stations, the terminal device will also take these into account in its search and, if they offer a better radio connection, request a handover if it is in connected mode or perform a cell reselection if it is in idle mode If the new base station is located in a different tracking area to the previous base station, the Access and Mobility Management Function (AMF) in the core network is also informed that the end device is located in a new tracking area and can be reached there via a paging message if necessary. If the terminal device cannot find a suitable cell or frequency for a handover or cell reselection from its list, it can try to connect to another network. An existing connection may be dropped in this case.
- Movement of the terminal device from a non-terrestrially supplied area to a non-terrestrially unsupplied area:
   If a terminal device is supplied by a non-terrestrial base station and moves into a non-terrestrially unsupplied area, for example a tunnel or a building, it performs the same process as when leaving a terrestrially supplied area.
- Movement of a terminal device with non-terrestrial coverage into an area with terrestrial coverage (e.g. the case considered in Fig. 4, when UE 64 moves into cell area 36):
   If a terminal device that is supplied by a non-terrestrial base station reaches an area with terrestrial coverage, the terrestrial base station should take over the supply to this terminal device again. This has the advantage for the mobile phone user that the terrestrial base station can offer the terminal device a radio connection with a higher data rate and lower latency than a non-terrestrial base station due to its shorter distance.
   However, the terminal device cannot recognize that it should switch to the terrestrial base station based on the above-mentioned parameters for measuring the reception power of the DL of the non-terrestrial base station. These parameters remain virtually the same within the satellite's coverage area due to the line of sight to the satellite and can therefore not be used as a trigger for a change.
   The only way out in 3GPP Releases 17 and 18 is for a terminal device to periodically scan the radio channels of terrestrial base stations. If it finds a channel with a sufficiently strong reception signal, it attempts to register with this terrestrial base station. This procedure has two disadvantages: If there are long intervals between successive searches, it is not possible to detect promptly when terrestrial coverage would be better. With short time intervals, on the other hand, frequent searching consumes a lot of energy and shortens the battery life accordingly.

Examples of the present disclosure may take advantage of the fact that smartphones emit their transmission signals all around and not just concentrated in the direction of a satellite. Using these signals, smartphones that communicate with a satellite and are within range of a terrestrial base station can be detected by this terrestrial base station. This terrestrial base station then informs the base station in the satellite, which in turn informs the smartphone about the possibility of switching to the terrestrial base station or prompts it to do so.

The following description first considers the case where a terrestrial radio cell lies completely within a non-terrestrial radio cell (as shown in Fig. 4). However, it is also conceivable that the terrestrial radio cell is located on the edge between several non-terrestrial radio cells and smartphones can be supplied by different satellites or non-terrestrial base stations. This situation is considered below.

In examples, a network in which, in addition to the transmitting and receiving antennas of the base stations on the ground, further transmitting and receiving antennas can also be located in the air on board HAPS or in space on board satellites. Base stations with antennas on the ground are referred to as parts of the terrestrial network (TN). If the antennas are not on the ground but onboard HAPS or satellites, the base stations belong to the non-terrestrial network (NTN). It is irrelevant for this procedure whether other components of the NTN base stations are on board satellites or HAPS in addition to the antennas or whether these components are located on the ground. (The procedure is therefore independent of whether the non-terrestrial base station 400 is located on board the HAPS or satellite as a so-called regenerative payload or on the ground according to the so-called bent-pipe architecture (which may also be referred to as amplify-and-forward concept).

In examples there is a connection between the terrestrial base stations 300 and the non-terrestrial base stations 400, e.g. for the exchange of signaling messages. This connection may be a direct link or an indirect link using the backbone of the mobile communication system 600. For example, the method 10 at the terrestrial base station 300 may comprise obtaining an address of the non-terrestrial base station 400 and the informing 14 of the non-terrestrial base station 400 may use said address.

For example, the address may be a transport network address or an IP address. The address may be determined using an intermediate step of determining a carrier frequency, used by the non-terrestrial base station 400 to serve a UE, and providing information about said carrier frequency to another network node, which then returns information about the address. Said network node may correspond to a network interworking function as will be detailed subsequently. The address can then be used by the terrestrial base station 300 to send a message to non-terrestrial base station 400. Information indicating such an address may be identification information read from the received signal or other information read from the received signal, which allows looking up an address of the non-terrestrial base station 400. Additionally or alternatively, a terrestrial base station 300 may just know that its radio cell lies in the coverage region of a specific non-terrestrial base station 400 and may then, in this scenario, always inform the same non-terrestrial base station 400. In other scenarios the covering non-terrestrial base station 400 may change over time, because of overflying satellites. So, the terrestrial base station 300 may know during which time its coverage area is covered by which non-terrestrial base station 400.

The interface that is used to communicate with the non-terrestrial base station 400 may be the Xn interface in the 5G standard of the 3GPP, but information transmitted in line with the present disclosure may be information additional to what is described in the Xn interface specification, e.g. 3GPP TS (Technical Specification) 38.423 V18.1.0 (2024-03), 3rd Generation Partnership Project, Technical Specification Group Radio Access Network, NG-RAN, Xn application protocol (XnAP), (Release 18).

The non-terrestrial base station 400 may be enabled to verify that the messages received via this interface originate from an authentic terrestrial base station 300. Otherwise, illegal base stations (similar to IMSI (International Mobile Subscriber Identity) catchers) could also use the procedure described here and have non-terrestrially supplied terminals transferred to them in order to intercept data traffic in this way. Suitable security mechanisms for communication between terrestrial and non-terrestrial base stations are not the subject of this disclosure, however, any known cryptographic algorithm may be used.

Terrestrial base stations have transmitters and receivers for one or more frequency bands via which they communicate with the end devices. For some of the methods disclosed herein terrestrial base stations are extended so that they can also receive and process signals on the UL frequency of the non-terrestrial base station 400. This allows them to receive signals sent from terminals to the non-terrestrial base station 400. In some examples, the same receiver processing means or components may be used. In other embodiments a base station may comprise additional receiver processing means or components to receive or overhear the signals transmitted from the UE to the non-terrestrial base station 400. Whether additional receiving means or components are necessary may depend on the carrier frequencies used by the UE for communicating with the non-terrestrial base station 400 and the terrestrial base station 300. The range of the receiver for the uplink to the non-terrestrial base station 400 should match the coverage area of the terrestrial base station 300 as far as possible. Antennas (in particular antenna gain and antenna alignment), amplifiers (gain, noise, etc.) and signal processing can be designed and configured accordingly.
1) It is also assumed that the terrestrial base station 300 knows the parameters for the UL connection to the non-terrestrial base station 400, in particular the carrier frequency on which the terminals transmit to the non-terrestrial base station 400.
2) The method is suitable for terminal devices that emit their transmission signals all around instead of in a beam directed at a satellite or a HAPS. Suitable terminals are therefore smartphones in particular, while terminals with parabolic or beamforming antennas (so-called Very Small Aperture Terminals, VSATs) are generally less suitable.
3) The method assumes that a terminal device is in connected mode, i.e. it is connected to a non-terrestrial base station 400 and transmits a signal to this non-terrestrial base station 400 in the UL. (It is irrelevant whether this signal carries user data or signaling data)

In the following the process steps of one specific example method are outlined:

### Step 1:

The base station detects a terminal device that is connected to a non-terrestrial base station and can be supplied by this base station via a terrestrial connection by receiving and demodulating the signals that the terminal device sends to the non-terrestrial base station in the UL in line with method 10. (Note: The signals may be received and processed by the terrestrial base station 300 in the same way as in the non-terrestrial base station 400. A pure measurement of the signal power is not sufficient for the following step 2).

### Step 2:

By suitable signal processing of the signals received in step 1, the terrestrial base station 300 determines parameters that can be used to identify the terminal device. There are different options conceivable, how the terrestrial base station 300 may determine/provide information about the UE 64 to the non-terrestrial base station 400 that allows identifying the UE 64 at the non-terrestrial base station 400. For example, the determining 13 of the information for identifying comprises decoding an identifier from the received signal. The terrestrial base station 300 may receive and decode the signal from the UE 64 and thereby decode an identifier. In mobile communication systems there are several candidate identifiers that may be used for this purpose.

Some examples are
International Mobile Subscriber Identity (IMSI, unique identifier for the subscriber, stored on the SIM (Subscriber Identity Module) card),
Temporary Mobile Subscriber Identity (TMSI, Temporary identifier assigned by the network to protect the IMSI, used during active sessions and in idle mode),
International Mobile Equipment Identity (IMEI, unique identifier for the mobile device used to identify and block stolen devices),
Globally Unique Temporary Identifier (GUTI, used in LTE networks, combines TMSI and Mobile Network Code (MNC) and provides mobility and security support),
Cell Radio Network Temporary Identifier (C-RNTI, temporary identifier used within a specific cell and assigned by the serving eNodeB (LTE) or gNodeB (5G NR)),
Subscriber Identity Module (SIM, smart card storing IMSI and cryptographic keys and used for authenticating and identifying the subscriber),
Universal Subscriber Identity Module (USIM, enhanced version of SIM for UMTS and LTE networks and stores IMSI, cryptographic keys, and other subscriber information),
Packet Temporary Mobile Subscriber Identity (P-TMSI, temporary identifier used in packet-switched domains, assigned by the Serving GPRS Support Node (SGSN)),
Routing Area Identity (RAI, identifier for a routing area in GPRS/UMTS networks, which combines Location Area Code (LAC) and Routing Area Code (RAC)),
Service Set Identifier (SSID, identifier for a wireless local area network (WLAN), which is not specific to mobile networks, but relevant for Wi-Fi connections), and
Enhanced Packet System Temporary Mobile Subscriber Identity (E-TMSI, temporary identifier used in Evolved Packet System (EPS), which is assigned by the Mobility Management Entity (MME)).

These identifiers play various roles in ensuring secure, efficient, and seamless communication and mobility management within mobile networks. Any one of these identifiers may be used for UE identification in examples. The identifiers listed above are examples and may also be used in different stages or modes of a UE.

In further examples, the determining 13 of the information for identifying comprises detecting characteristic information from the received signal and forwarding of the characteristic information to the non-terrestrial base station 400 to enable UE identification at the non-terrestrial base station 400. For example, the characteristic information comprises information about parameters of the signal of the UE.

### Step 3:

The parameters determined in step 2 are evaluated to identify the end device. Various examples are conceivable, depending on which parameters were determined in step 2. These examples are described below. Depending on the example of this step, the identification can take place at the terrestrial base station 300, in the non-terrestrial base station 400 or in the core network. For this purpose, the parameters determined in step 2 are transmitted from the terrestrial base station 300 to the non-terrestrial base station 400 or to the core network. The method 20 at the non-terrestrial base station 400 comprises identifying the UE based on the information provided by the terrestrial base station 300, which may also be through the core network. The identifying is based on an identification of the UE provided by the terrestrial base station 300 or based on characteristic information for the signals of the UE provided by the terrestrial base station 300.

### Step 4:

If the non-terrestrial base station 400 is shared by networks of several mobile network operators, it is checked whether the terrestrial network whose base station the terminal has identified is the home network (home PLMN) of the terminal or a guest network (visited PLMN) that can supply the terminal as part of roaming.

### Step 5:

If the terrestrial base station 300 can supply the identified terminal device 64, the responsible non-terrestrial base station 400 is informed that the terminal device 64 in question can be supplied via a terrestrial connection. The non-terrestrial base station 400 may also be informed by the terrestrial base station 300 about parameters required for the terrestrial radio link, in particular its frequency.

### Step 6:

The non-terrestrial base station 400 informs the terminal device 64 of the parameters it has received from the terrestrial base station 300 and instructs the terminal device 64 to measure whether there is a better radio connection to the terrestrial base station 300.

### Step 7:

If the terminal device is in connected mode and the measured values reported by the terminal device 64 meet the requirements for switching to the terrestrial base station 300, the non-terrestrial base station 400 initiates a handover in accordance with the procedures defined in the 3GPP standards.

If the terminal device 64 has switched to idle mode during steps 1-6 and the measured values meet the requirements for switching to the terrestrial base station 300, the terminal device 64 performs a cell reselection instead of the handover in step 7. The applicability of the methods 10, 20 described is therefore not hindered or restricted by the possibility of the end device 64 switching from connected mode to idle mode in between.

Several examples or options for the implementation of the above steps are conceivable.

In principle, terrestrial base stations 300 can be equipped with separate antennas and RF (Radio Frequency) components for terrestrial mobile radio operation and for receiving UL (uplink) signals from terminals to the non-terrestrial base station 400. However, it can be advantageous to use the antennas and RF components already available for terrestrial mobile radio operation of the terrestrial base station 300 to receive UL signals from terminals to the non-terrestrial base station. The prerequisite for this is that the terrestrially used frequency bands and the UL to the non-terrestrial base station 400 are sufficiently close to each other. This shared use of existing components has two advantages: On the one hand, costs for additional components are avoided. Secondly, the terrestrial coverage area and the reception area for the UL to the non-terrestrial base station 400 are approximately the same if the same antennas and similar carrier frequencies are used.

Various designs are conceivable for the connection between the terrestrial and non-terrestrial base stations 300, 400. For example, the transport network address of the non-terrestrial base station 400 is known in the core network because the core network has a backhaul connection to the non-terrestrial base station 400. The terrestrial base station 300 can therefore send messages for the non-terrestrial base station 400 to a central network function, which in turn forwards this message to the non-terrestrial base station 400. The terrestrial base station 300 may know which non-terrestrial base station 400 to address by look up, by receiving broadcast information from the non-terrestrial base station 400, and/or by pre-configuration.

In another example, the terrestrial base station 300 can send a message directly to the non-terrestrial base station 400 without going through a central network function. To do this, the non-terrestrial base station 400 sends its transport network address, e.g. its IP address, in its broadcast channel in the DL. The terrestrial base station 300 is equipped with an additional receiver to receive the DL of the non-terrestrial base station 400. This allows the terrestrial base station 300 to receive the transport network address of the non-terrestrial base station 400 and then send the message that a specific terminal device should be requested to switch to the terrestrial base station 300 directly to the transport network address of the non-terrestrial base station 400, without going through a central network function that then forwards the message.

In further examples, identification of the terminal device 64 can be simplified by the terminal device 64 emitting a corresponding identifier, e.g. one of the above. For example, this identifier could be transmitted together with the channel state information (CSI). This simplifies matters for the terrestrial base station 300 but has the disadvantage for the terminal device 64 that part of the transmission power is used for this identifier, which reduces the UL data rate and increases battery consumption. In another embodiment, the terrestrial base station 300 may forward a single or a sequence of multiple Channel State Information (CSI) messages together with the reception times to the non-terrestrial base station 400. The characteristic information may hence be information about measurements conducted by the UE 64. The characteristic information may comprise reception times of signals from the UE 64.

For example, the channel state information describes the quality of the radio channel from the non-terrestrial base station 400 to the terminal device 64 on the ground and changes very quickly (typically within a few milliseconds). The reception time at the terrestrial base station 300 is only slightly later than the transmission time at the end device 64 due to the short distance between the end device and the terrestrial base station 300. The sequence of CSI values in conjunction with the transmission times is therefore characteristic of a single terminal device 64. Since the non-terrestrial base station 400 also receives the CSI messages and takes the distance-related signal propagation time into account during signal processing anyway, it can determine the relevant terminal device from this information.

A further example to simplify the reception and identification of terminals can be that the terrestrial base station 300 not only listens to the signals of the terminals in the UL to the non-terrestrial base station 400, but also listens to the control channel in the DL of the non-terrestrial base station 400 to the terminals, in which the non-terrestrial base station 400 informs the terminals which terminal may use which UL resources, e.g. per Downlink Control Information (DCI). In addition to the receiver described above, a further receiver for the DL of the non-terrestrial base station 400 may be installed on/at the terrestrial base station 300. This is basically the same type of receiver as in a terminal device. The terrestrial base station 300 can use this receiver to track which terminal devices are allowed to access the UL channel to the non-terrestrial base station 400 and how, and to identify the terminal devices.

Furthermore, the search for the relevant terminal device in the non-terrestrial base station 400 can be restricted to those terminal devices that are located in the same non-terrestrial radio cell. For this purpose, the terrestrial base station 300 can communicate its own geographical position to the non-terrestrial base station 400, because the non-terrestrial base station 400 knows which geographical areas are covered by its radio cells, and it can therefore calculate the non-terrestrial radio cell in which the terrestrial base station 300 and therefore also the terminal device 64 in question are located. In some examples, the terrestrial base station 300 may inform the non-terrestrial base station 400 about the coverage area of the terrestrial base station 300 to facilitate identification of the UE 64 at the non-terrestrial base station 400 using a location of the UE 64.

Alternatively, if the terrestrial base station 300 has a receiver for the DL of the non-terrestrial base station 400, it can use this receiver to determine the identifier, e, g, by means of the carrier frequency used, of the non-terrestrial radio cell that supplies the terminal in question and it may communicate this identifier to the non-terrestrial base station 400. For example, the terrestrial base station 300 may communicate information about the carrier frequency used by the non-terrestrial base station 400 to serve the terminal to another network node, which returns a respective identifier or address to the terrestrial base station 300. The other network node may provide an interworking function as will be detailed in the sequel. The informing 14 of the non-terrestrial base station 400 may further include informing the non-terrestrial base station 400 about parameters of the terrestrial base station 300 to enable handover and/or cell reselection of the UE from the non-terrestrial base station 400 to the terrestrial base station 300.

The instruction of the non-terrestrial base station 400 to the terminal device 64 to measure the radio signals of the terrestrial base station 300 can be carried out in particular by
i) the non-terrestrial base station 400 informing the terminal device 64 of the parameters that it has received from the terrestrial base station 300,
ii) the terminal device 64 entering these parameters, e.g. one or more carrier frequencies, in its list of neighbor cells or frequencies for handover, and
iii) if not already done earlier, the non-terrestrial base station 400 instructing the terminal device 64 to search for a base station with a better radio link among the base stations/frequencies mentioned in the list of neighbor cells or frequencies for handover (including the newly added terrestrial base station).

The informing 23 of the UE 64 may hence comprise instructing the UE 64 to add a cell of the terrestrial base station 300 to a neighbor cell list maintained at the UE for handover and/or cell selection measurements. The informing 23 of the UE 64 may further comprise instructing the UE to handover to the terrestrial base station 300 or to reselect a cell of the terrestrial base station 300.

In some examples, a terrestrial radio cell may be at the edge between several non-terrestrial radio cells. If a terrestrial radio cell is located in the peripheral area between several non-terrestrial radio cells, terminal devices located there can be supplied by different non-terrestrial radio cells, including possibly also by different satellites with non-terrestrial base stations. In order for a terrestrial base station to be able to detect all non-terrestrially supplied terminals in this situation, it may carry out the procedure described above for each of the non-terrestrial radio cells.

To avoid mutual interference between neighboring non-terrestrial radio cells, they may work with separate radio channels. This separation is usually achieved by using different carrier frequencies, i.e. by means of frequency division multiplexing (FDM), however, code division multiplexing (CDM) or time division multiplexing (TDM) are also technically possible. The carrier frequencies (or the corresponding parameters in the case of CDM or TDM) of each of these non-terrestrial radio cells are known to the terrestrial base station 300 in accordance with the above assumption. Similarly, there may be communication paths from the terrestrial base station 300 to the base station of each of the non-terrestrial radio cells.

If a terminal device is detected in accordance with step 1 above, the carrier frequency (or the corresponding parameters in the case of CDM or TDM) can be used to identify, which of the non-terrestrial radio cells supplies this terminal device, and the terrestrial base station can then contact the base station belonging to this non-terrestrial radio cell.

In examples the following characteristic properties of the process may apply. The described examples may differ from the previous 5G standard by the following properties:
- The possibility of handover or cell reselection is determined by measurements of the terrestrial base station, not measurements of a terminal device.
- The procedure by which a terrestrial base station informs the non-terrestrial base station about the possibility of providing terrestrial coverage to a specific terminal device does not yet exist in the 5G standard.
- The communication link between the terrestrial and non-terrestrial base station transmits information other than that provided for in the 5G standard for the Xn interface.

In contrast to the Integrated/Joint Communication And Sensing (ICAS or JCAS) methods discussed in connection with 6G, the methods 10, 20 described here do not require the terminal device to be located or positioned. Rather, it is sufficient to recognize that the end device is within radio range of the terrestrial base station.

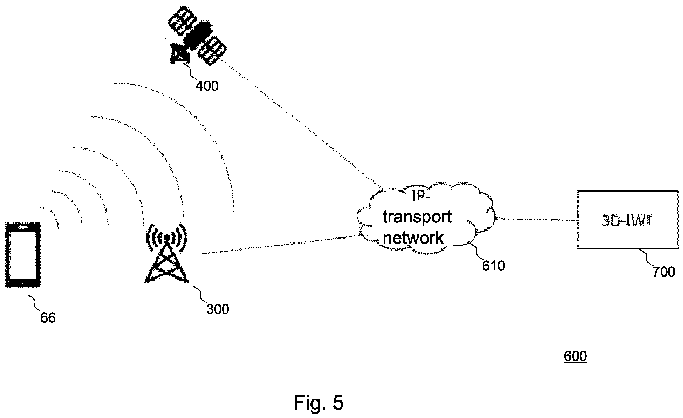

The following example assumes that the non-terrestrial base stations operate on frequency bands close to the terrestrial carrier frequencies and, as described as an example of requirement 3), the existing antennas and RF components of the terrestrial base station can be used to detect terminals with non-terrestrial coverage. This eliminates the need for additional hardware at the terrestrial base stations. Communication between terrestrial and non-terrestrial base stations is coordinated via a 3D interworking function in the core network, as shown in the following Fig. 5. Fig. 5 illustrates another example in a mobile communication system 600. In the scenario depicted in Fig. 5 a UE 66 communicates with a non-terrestrial base station 400. The signals from the UE 66 are also received at terrestrial base station 300. Both base stations 300, 400 are connected to an IP transport network 610, which in turn is coupled to a 3D-IWF 700 (Inter Working Function). In this example the 3D-IWF 700 is an example of a network node 500, which carries out the above method 30. In other examples the respective method 30 may as well be implemented in another network node.

In this example, the informing 34 about the neighboring cell (frequency) is performed by informing the terrestrial base station 300 about a carrier frequency of the neighboring cell. At the 3D-IWF 700 the obtaining 31 of the information about the one or more radio cells 46 of the non-terrestrial base station 400 comprises obtaining/receiving geographical information about the cell centers of the one or more radio cells 46 of the non-terrestrial base station 400. The obtaining 32 of the information about the one or more radio cells 36 of the terrestrial base station 300 comprises obtaining geographical information about the cell centers of the one or more radio cells 36 of the terrestrial base station 300. The 3D-IWF 700
- receives the geographical centers of the non-terrestrial, earth-fixed cells, their radio parameters (carrier frequencies) and the transport network addresses (IP addresses) of the non-terrestrial base stations from the non-terrestrial base stations;
- receives the geographical centers of the terrestrial radio cells from the terrestrial base stations;
- uses the geographical information for each terrestrial radio cell to determine the possible non-terrestrial neighboring cells that can take over a terminal device if it loses terrestrial coverage;
- informs the terrestrial radio cells of the non-terrestrial neighboring cells and their parameters so that the terrestrial radio cells can inform its UEs via RRC signaling or broadcast channel to monitor the non-terrestrial neighboring cells for handover or cell re-selection;
- informs the terrestrial base stations on which carrier frequencies they can detect terminals that are supplied by the non-terrestrial neighboring cells and via which transport network addresses (IP addresses) they can reach their non-terrestrial base stations (Each non-terrestrial base station may use a different carrier frequency and a non-terrestrial base station may be identified by its carrier frequency); and
- updates the specified data if it changes, e.g. due to the movement of the satellites.

The method 30 may the comprise receiving information about a carrier frequency of a non-terrestrial base station 400 serving a UE from a terrestrial base station 300. The method 30 further comprises providing information about an address of the non-terrestrial base station 400 to the terrestrial base station 300. The terrestrial base station 300 adds its non-terrestrial neighbor cells, their frequencies, respectively, to its Neighbor Cell List (frequency list) and distributes the extended Neighbor Cell List on its broadcast channel and/or informs UEs via RRC signaling so that terrestrially supplied terminals can perform a cell re-selection or request a handover to a non-terrestrial radio cell as soon as they lose terrestrial coverage.

Furthermore, the terrestrial base station 300 carries out measurements on the UL frequencies of the non-terrestrial base stations 400 using the information received from the 3D-IWF 700 as described in step 1 above. If it detects a terminal device 66, it measures a sequence of CSI values and sends these, together with the reception times, to the IP transport address of the corresponding non-terrestrial base station 400 as in step 2 above.

The non-terrestrial base station 400 identifies the terminal device by comparing the sequence of CSI values that it has received from the terrestrial base station 300 with the CSI values that it has received from the terminal devices 66 themselves via its UL channel (step 3).

Once it has identified the terminal device 66, the non-terrestrial base station 300 checks whether the terrestrial base station belongs 400 to the home PLMN of the terminal device and is therefore authorized to supply the terminal device (step 4).

If so, the non-terrestrial base station 400 requests the necessary parameters from the terrestrial base station 300 to extend the list of cells or carrier frequencies of cells to be measured by the terminal (step 5), informs the terminal 66 of these parameters and requests it to carry out appropriate measurements in preparation for a handover to the terrestrial base station 300 (step 6). If the measured values meet the necessary requirements, the non-terrestrial base station 400 initiates a handover in accordance with the existing 3GPP procedures (step 7).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for a terrestrial base station (300) of a mobile communication system (600), the method (10) comprising
offering (11) radio services in one or more radio cells covered by the terrestrial base station (300);
receiving (12) a signal transmitted from a user equipment, UE (64; 66), located in the one or more radio cells to a non-terrestrial base station (400) of the mobile communication system (600);
determining (13) information for identifying the UE (64; 66) based on the received signal; and
informing (14) the non-terrestrial base station (400) about the UE (64; 66) if the UE (64; 66) can be served by the terrestrial base station (300).

2. The method (10) of claim 1 further comprising obtaining an address of the non-terrestrial base station (400) and wherein the informing (14) of the non-terrestrial base station (400) uses the address.

3. The method (10) of one of the claims 1 or 2, wherein the determining (13) of the information for identifying comprises decoding an identifier from the received signal.

4. The method (10) of one of the claims 1 or 2, wherein the determining (13) of the information for identifying comprises detecting characteristic information from the received signal and forwarding of the characteristic information to the non-terrestrial base station (400) to enable UE identification at the non-terrestrial base station (400).

5. The method (10) of claim 4, wherein the characteristic information is information about measurements conducted by the UE (64; 66) and/or wherein the characteristic information comprises reception times of signals from the UE (64; 66).

6. The method (10) of one of the claims 1 to 5, further comprising informing (14) the non-terrestrial base station (400) about the coverage area of the terrestrial base station (300) to facilitate identification of the UE (64; 66) at the non-terrestrial base station (400) using a location of the UE (64;66) and/or further comprising informing the non-terrestrial base station (400) about parameters of the terrestrial base station (300) to enable handover and/or cell reselection of the UE (64; 66) from the non-terrestrial base station (400) to the terrestrial base station (300).

7. A method (20) for a non-terrestrial base station (400) of a mobile communication system (600), the method (20) comprising
communicating (21) radio signals with user equipment, UE (64;66), located in one or more radio cells of the non-terrestrial base station (400);
receiving (22) information from a terrestrial base station (300) indicating that the terrestrial base station (300) is capable of serving a UE (64; 66) currently communicating with the non-terrestrial base station (400); and
informing (23) the UE (64; 66) about the terrestrial base station (300).

8. The method (20) of claim 7, further comprising identifying the UE (64; 66) based on information provided by the terrestrial base station (300).

9. The method (20) of claim 8, wherein the identifying is based on an identification of the UE (64; 66) provided by the terrestrial base station (300) or based on characteristic information for the signals of the UE (64; 66) provided by the terrestrial base station (300).

10. The method (20) of one of the claims 7 to 9, wherein the informing of the UE (64; 66) comprises instructing the UE (64;66) to add a cell or frequency of a cell of the terrestrial base station (300) to a list of cells or frequencies of cells maintained at the UE (64; 66) for handover and/or cell selection measurements and/or wherein the informing of the UE (64; 66) comprises instructing the UE (64; 66) to handover to the terrestrial base station (300) or to reselect a cell of the terrestrial base station (300).

11. A method (30) for a network node (500) of a mobile communication system (600), the method (30) comprising
obtaining (31) information about one or more radio cells (46) of a non-terrestrial base station (400);
obtaining (32) information about one or more radio cells (36) of a terrestrial base station (300);
determining (33) neighbor relations between the one or more radio cells of the non-terrestrial base station (400) and the one or more cells of the terrestrial base station (300); and informing (34) the terrestrial base station (300) about a neighboring cell (46) of the non-terrestrial base station (400).

12. The method (30) of claim 11, wherein the informing (34) about the neighboring cell is performed by informing the terrestrial base station (300) about a carrier frequency of the neighboring cell, and/or wherein the obtaining (31) of the information about the one or more radio cells (46) of the non-terrestrial base station (400) comprises obtaining geographical information about the cells of the one or more radio cells (46) of the non-terrestrial base station (400) and wherein the obtaining (32) of the information about the one or more radio cells (36) of a terrestrial base station (300) comprises obtaining geographical information about the cells of the one or more radio cells (36) of the terrestrial base station (300).

13. The method (30) of one of the claims 11 or 12, further comprising receiving information about a carrier frequency of a non-terrestrial base station (400) serving a UE from a terrestrial base station (300) and providing information about an address of the non-terrestrial base station (400) to the terrestrial base station (300).

14. An apparatus (30; 40; 50) for a base station (300; 400) or a network node (500) of a mobile communication system (600), the apparatus (30; 40) comprising
one or more interfaces (32; 42; 52) configured to communicate in the mobile communication system (600);
one or more signal processing devices (34; 44; 54) configured to process signals communicated in the mobile communication system (600) using the one or more interfaces (32; 42; 52);
wherein the one or more signal processing devices (34; 44) are further configured to perform one of the methods (10; 20; 30) of claims 1 to 14.

15. A computer program having a program code for performing one of the methods (10; 20; 30) of one of the claims 1 to 13, when the computer program is executed on a computer, a processor, or a programmable hardware component.

## Amended claims

### Amended claims in accordance with Rule 137(2) EPC.

1. A method (10) for a terrestrial base station (300) of a mobile communication system (600), the method (10) comprising
offering (11) radio services in one or more radio cells covered by the terrestrial base station (300);
receiving (12) a signal transmitted from a user equipment, UE (64; 66), located in the one or more radio cells to a non-terrestrial base station (400) of the mobile communication system (600);
determining (13) information for identifying the UE (64; 66) based on the received signal, the information for identifying comprises information that allows identifying the UE (64; 66) at the non-terrestrial base station (400); and
informing (14) the non-terrestrial base station (400) about the UE (64; 66) if the UE (64; 66) can be served by the terrestrial base station (300) by providing the information for identifying the UE (64;66) to the non-terrestrial base station (400).

2. The method (10) of claim 1 further comprising obtaining an address of the non-terrestrial base station (400) and wherein the informing (14) of the non-terrestrial base station (400) uses the address.

3. The method (10) of one of the claims 1 or 2, wherein the determining (13) of the information for identifying comprises decoding an identifier from the received signal.

4. The method (10) of one of the claims 1 or 2, wherein the determining (13) of the information for identifying comprises detecting characteristic information from the received signal and forwarding of the characteristic information to the non-terrestrial base station (400) to enable UE identification at the non-terrestrial base station (400).

5. The method (10) of claim 4, wherein the characteristic information is information about measurements conducted by the UE (64; 66) and/or wherein the characteristic information comprises reception times of signals from the UE (64; 66).

6. The method (10) of one of the claims 1 to 5, further comprising informing (14) the non-terrestrial base station (400) about the coverage area of the terrestrial base station (300) to facilitate identification of the UE (64; 66) at the non-terrestrial base station (400) using a location of the UE (64;66) and/or further comprising informing the non-terrestrial base station (400) about parameters of the terrestrial base station (300) to enable handover and/or cell reselection of the UE (64; 66) from the non-terrestrial base station (400) to the terrestrial base station (300).

7. A method (20) for a non-terrestrial base station (400) of a mobile communication system (600), the method (20) comprising
communicating (21) radio signals with user equipment, UE (64;66), located in one or more radio cells of the non-terrestrial base station (400), a signal being transmitted from the UE (64; 66) located in the one or more radio cells to the non-terrestrial base station (400);
receiving (22) information from a terrestrial base station (300) indicating that the terrestrial base station (300) is capable of serving a UE (64; 66) currently communicating with the non-terrestrial base station (400), the received information comprises information that allows identifying the UE (64; 66) at the non-terrestrial base station (400);
identifying the UE (64; 66) based on information provided by the terrestrial base station (300); and
informing (23) the UE (64; 66) about the terrestrial base station (300).

8. The method (20) of claim 7, wherein the identifying is based on an identification of the UE (64; 66) provided by the terrestrial base station (300) or based on characteristic information for the signals of the UE (64; 66) provided by the terrestrial base station (300).

9. The method (20) of one of the claims 7 or 8, wherein the informing of the UE (64; 66) comprises instructing the UE (64;66) to add a cell or frequency of a cell of the terrestrial base station (300) to a list of cells or frequencies of cells maintained at the UE (64; 66) for handover and/or cell selection measurements and/or wherein the informing of the UE (64; 66) comprises instructing the UE (64; 66) to handover to the terrestrial base station (300) or to reselect a cell of the terrestrial base station (300).

10. A method (30) for a network node (500) of a mobile communication system (600), the method (30) comprising
obtaining (31) information about one or more radio cells (46) of a non-terrestrial base station (400);
obtaining (32) information about one or more radio cells (36) of a terrestrial base station (300);
determining (33) neighbor relations between the one or more radio cells of the non-terrestrial base station (400) and the one or more cells of the terrestrial base station (300); and
informing (34) the terrestrial base station (300) about a neighboring cell (46) of the non-terrestrial base station (400) and providing information about an address of the non-terrestrial base station (400) to the terrestrial base station (300).

11. The method (30) of claim 10, wherein the informing (34) about the neighboring cell is performed by informing the terrestrial base station (300) about a carrier frequency of the neighboring cell, and/or wherein the obtaining (31) of the information about the one or more radio cells (46) of the non-terrestrial base station (400) comprises obtaining geographical information about the cells of the one or more radio cells (46) of the non-terrestrial base station (400) and wherein the obtaining (32) of the information about the one or more radio cells (36) of a terrestrial base station (300) comprises obtaining geographical information about the cells of the one or more radio cells (36) of the terrestrial base station (300).

12. The method (30) of one of the claims 10 or 11, further comprising receiving information about a carrier frequency of a non-terrestrial base station (400) serving a UE from a terrestrial base station (300).

13. An apparatus (30; 40; 50) for a base station (300; 400) or a network node (500) of a mobile communication system (600), the apparatus (30; 40) comprising
one or more interfaces (32; 42; 52) configured to communicate in the mobile communication system (600);
one or more signal processing devices (34; 44; 54) configured to process signals communicated in the mobile communication system (600) using the one or more interfaces (32; 42; 52);
wherein the one or more signal processing devices (34; 44) are further configured to perform one of the methods (10; 20; 30) of claims 1 to 12.

14. A computer program having a program code for performing one of the methods (10; 20; 30) of one of the claims 1 to 12, when the computer program is executed on a computer, a processor, or a programmable hardware component.
